# EUROPEAN PATENT SPECIFICATION

(11) **EP 3 098 450 B1**
(45) Date of publication and mention of the grant of the patent: **26.06.2019**
(21) Application number: 15196423.6
(22) Date of filing: 26.11.2015
(51) Int. Cl.: F04B 49/06, F04B 51/00

(54) **METHOD AND APPARATUS FOR DIAGNOSING A HYDRAULIC MACHINE, POWER GENERATING APPARATUS OF RENEWABLE-ENERGY TYPE, AND METHOD OF DIAGNOSING THE SAME**
VERFAHREN UND VORRICHTUNG ZUR DIAGNOSE EINER HYDRAULISCHEN MASCHINE, VORRICHTUNG ZUR ERZEUGUNG VON STROM AUS ERNEUERBAREN ENERGIE UND VERFAHREN ZUR DIAGNOSE DAVON
PROCÉDÉ ET APPAREIL DE DIAGNOSTIC DE MACHINE HYDRAULIQUE, APPAREIL DE GÉNÉRATION DE PUISSANCE DE TYPE À ÉNERGIE RENOUVELABLE ET MÉTHODE DE DIAGNOSTIC ASSOCIÉE

(30) Priority: 29.05.2015 JP 2015109739
(43) Date of publication of application: 30.11.2016
(60) Divisional application: 17174345.3
(73) Proprietor: MITSUBISHI HEAVY INDUSTRIES, LTD., Tokyo 108-8215 (JP)
(72) Inventor: Ohira, Takeo, Tokyo, 108-8215 (JP); Miki, Takeshi, Tokyo, 108-8215 (JP); Caldwell, Niall, Lothian, Lothian EH20 9TB (GB); Dumnov, Daniil, Lothian, Lothian EH20 9TB (GB)
(74) Representative: Henkel, Breuer & Partner

(56) References cited:
- GB-A- 2 036 894
- US-A- 4 523 286
- US-A1- 2010 032 959
- US-A1- 2015 032 270

## Description

### TECHNICAL FIELD

The present disclosure relates to a method and an apparatus for diagnosing a hydraulic machine, a power generating apparatus of renewable-energy type, and a method of diagnosing the same.

### BACKGROUND ART

Generally, as a hydraulic machine such as a hydraulic pump and a hydraulic motor, known is a configuration in which a plurality of cylinder units is disposed around a rotation shaft. A cylinder unit includes a piston, a cylinder, and a high-pressure valve and a low-pressure valve for controlling inflow and outflow of working oil with respect to a working chamber defined by the piston and the cylinder. For instance, US2010/0032959A discloses a hydraulic pump including a plurality of pistons, a plurality of cylinders, a cam which slides the pistons cyclically in the cylinders, and high-pressure valves and low-pressure valves which are opened and closed in accordance with the timing of the reciprocating motion of the pistons.

As a method of diagnosing failure of such a hydraulic machine, JP2012-107687A discloses, for instance, a failure diagnosing apparatus which diagnoses failure of a hydraulic pump on the basis of an output signal of a pressure sensor for detecting a discharge pressure of the hydraulic pump.

US2015032270A discloses systems and methods for diagnosing components of a control system. In some embodiments, the spectral content of various signals originating from a control valve is used to detect periodic patterns that can correspond to valve problems.

### SUMMARY

In the above hydraulic machine, when failure occurs in a component of one of the plurality of cylinder units, it is required to detect the failure in the cylinder unit in an early stage because such failure may lead to serious damage such as damage to a cam surface. For instance, in a hydraulic pump, if a high-pressure valve gets stuck in an open state, continuing operation of the hydraulic pump in such a state may cause damage to a cam or piston parts (e.g. rollers or shoes) contacting the cam. Thus, it is necessary to detect and address such failure in an early stage.

To diagnose failure of a cylinder unit, a possible approach is to diagnose failure by detecting an in-cylinder pressure of each cylinder with a pressure sensor disposed in the cylinder. However, in this way, as many pressure sensors as the cylinder units are required, which leads to complex configuration of the hydraulic machine and requires a high cost.

Further, if failure is diagnosed on the basis of an output signal of a pressure sensor for detecting a discharge pressure of the hydraulic pump as described in JP2012-107687A, it may be difficult to diagnose a failure due to a trouble of a component of a cylinder unit because there are factors that also cause a pressure fluctuation besides the failure due to a trouble of a component of a cylinder unit.

In view of the above issues, an object of at least one embodiment of the present invention is to provide a method and an apparatus for diagnosing a hydraulic machine, a power generating apparatus of renewable-energy type and a method of diagnosing the same, whereby it is possible to diagnose failure of a hydraulic machine due to a trouble of a component of a cylinder unit appropriately.
(1)A method of diagnosing a hydraulic machine according to at least one embodiment of the present invention is for a hydraulic machine comprising a rotation shaft, a high-pressure line, a low-pressure line, a plurality of cylinders, a plurality of pistons configured to be guided by the respective cylinders, a cam configured to reciprocate the pistons in conjunction with rotation of the rotation shaft, a plurality of high-pressure valves provided for respective working chambers formed by the cylinders and the pistons, for switching a communication state between the high-pressure line and the respective working chambers, and a plurality of low-pressure valves provided for the respective working chambers, for switching a communication state between the low-pressure line and the respective working chambers. The method comprises a step of detecting a torque of the rotation shaft in a no-load state of the hydraulic machine, and a step of detecting a failure of the hydraulic machine, the failure including at least one of sticking of the high-pressure valves in an open state, sticking of the low-pressure valves in a closed state, or sticking of the pistons, on the basis of a standard deviation of the torque of the rotation shaft in a no-load state of the hydraulic machine..
   In the above method (1), when a failure of a hydraulic machine due to a trouble of a cylinder unit is diagnosed, at least the standard deviation of torque of the rotation shaft in a no-load state of the hydraulic machine is used. In this way, it is possible to perform failure diagnosis which is less likely to be influenced by a failure caused by a different factor from that of a failure due to a trouble of a cylinder unit. Thus, it is possible to diagnose a failure of a hydraulic machine appropriately, the failure including at least one of sticking of the high-pressure valves in an open state, sticking of the low-pressure valves in a closed state, or sticking of the pistons. Further, since it is unnecessary to provide each of the plurality of cylinder units with a detection part such as an in-cylinder pressure sensor, it is possible to simplify the configuration and to reduce the cost. In the present embodiment, a cylinder unit includes a piston, a cylinder, a high-pressure valve, and a low-pressure valve.
(2) In some embodiments, in the above method (1), if a magnitude of the fluctuation component of the specific frequency is greater than a threshold value, it is determined that at least one of sticking of the high-pressure valves in the open state, sticking of the low-pressure valves in the closed state, or sticking of the pistons, has occurred.
   According to the above method (2), it is determined that there is a failure if the magnitude of the fluctuation component of the specific frequency is greater than the threshold value, which makes it possible to determine a failure of the hydraulic machine easily, the failure including at least one of sticking of the high-pressure valves in the open state, sticking of the low-pressure valves in the closed state, or sticking of the pistons.
(3) In some embodiments, in the above method (1) or (2), the hydraulic machine comprises a hydraulic pump for producing pressurized oil, the cam of the hydraulic pump includes a plurality of cam lobes arranged in a circumferential direction of the rotation shaft, and a failure of the hydraulic pump is detected on the basis of the magnitude of the fluctuation component of the specific frequency represented by ω × m (where m is an integer not less than two) from among the torque fluctuation of the rotation shaft, the pressure fluctuation in the high-pressure line, and the output fluctuation of the hydraulic machine.
   For instance, if sticking occurs in the high-pressure valves in the open state, high-pressure oil keeps flowing into the working chambers, and the in-cylinder pressure may become excessively high. The influence of the in-cylinder pressure having become excessively high normally appears in the torque of the rotation shaft, the pressure in the high-pressure line, or the output of the hydraulic machine. If a sticking failure of the high-pressure valve occurs in only one of the plurality of cylinder units, the influence of the cylinder unit with the sticking failure appears remarkably as the fluctuation component of the specific frequency represented by ω × m (where m is an integer not less than two) determined from the rotation speed ω of the rotation shaft and the number m of the cam lobes of the cam, because the piston reciprocates in the cylinder cyclically in accordance with the cam lobes. On the other hand, the fluctuation component may appear in the torque of the rotation shaft, the pressure in the high-pressure line, or the output of the hydraulic machine due to other factors when the load is high, for instance. However, the fluctuation component of the above specific frequency would not appear unless the cyclic reciprocating motion of the piston is affected. Thus, according to the above method (3), it is possible to eliminate influence due to other factors and detect sticking of the high-pressure valves in the open state appropriately. Similarly, the influence of the cyclic reciprocating motion of the pistons corresponding to the cam lobes also appears in the event of sticking of the low-pressure valves in the closed state or sticking of the pistons. Thus, according to the above method (3), it is possible to eliminate the influence due to other factors and to detect sticking of the low-pressure valves in the closed state or sticking of the pistons appropriately.
(4) In some embodiments, in the above methods (1) to (3), the step of detecting a failure of the hydraulic machine comprises monitoring whether the magnitude of the fluctuation component of the specific frequency exceeds a threshold value during operation of the hydraulic machine. If the fluctuation component exceeds the threshold value, the operation of the hydraulic machine is halted.
   According to the above method (4), if the fluctuation component is greater than a threshold value, the hydraulic machine is determined to have a failure and operation of the hydraulic machine is halted. Thus, it is possible to prevent in advance occurrence of serious malfunction of the hydraulic machine which may be caused by continuous operation.
(5) In some embodiments, in the above methods (1) to (4), if the standard deviation of the torque in the no-load state is greater than a threshold value, it is determined that at least one of sticking of the high-pressure valves in the open state or sticking of the pistons has occurred.
   For instance, if a sticking failure of one of the high-pressure valves is occurring in only one of the plurality of cylinder units, there is substantially no influence from other factors while the hydraulic machine is in the no-load state, because the other pistons are not operating, and only the influence from the cylinder unit with the sticking failure appears remarkably in the torque of the rotation shaft. Thus, according to the above method (5), it is possible to eliminate influence due to other factors and detect sticking of the high-pressure valves in the open state appropriately. For similar reason, it is possible to detect sticking of the low-pressure valves in the closed state or sticking of the pistons appropriately.
(6) In one embodiment, in the above method (5), the hydraulic machine comprises a hydraulic pump for producing pressurized oil, and the step of detecting a failure of the hydraulic machine comprises detecting a failure of the hydraulic pump on the basis of the standard deviation of the torque of the rotation shaft of the hydraulic pump at the time when the hydraulic pump is not pumping.
   According to the above method (6), a failure of the hydraulic pump is detected on the basis of the standard deviation of the torque of the rotation shaft at the time when the hydraulic pump is not pumping. Thus, it is possible to maintain the no-load state securely, which makes it possible to diagnose a failure appropriately using the standard deviation of the torque.
(7) In some embodiments, in the above method (5) or (6), the hydraulic machine comprises a hydraulic motor for driving a generator, and the step of detecting a failure of the hydraulic machine comprises detecting a failure of the hydraulic motor on the basis of the standard deviation of the torque of the rotation shaft during no-load rotation of the hydraulic motor immediately after the generator is connected to a grid.
   In a case where the hydraulic motor is used as an off-grid power, the no-load rotation may be performed immediately after connection of the generator to the grid when the generator is to be connected. The no-load rotation may be performed also during a certain period from immediately before the connection to immediately after the connection. Thus, if the failure detection based on the standard deviation of the torque of the rotation shaft is performed on the hydraulic motor utilizing the above no-load rotation, it is possible to diagnose a failure without interrupting normal operation.
(8) In one embodiment, in the above method (7), the method further comprises a step of increasing a rotation speed of the hydraulic motor until the generator reaches a rated rotation speed. The step of detecting a failure of the hydraulic machine comprises detecting a failure of the hydraulic motor on the basis of the standard deviation of the torque of the rotation shaft at the time when the generator has reached the rated rotation speed and the hydraulic motor is in the no-load state.
   According to the above method (8), failure detection is performed when the generator has reached the rated rotation speed and the hydraulic motor is in the no-load state. Thus, the influence due to a trouble of a cylinder unit is remarkably reflected to the torque. Thus, it is possible to diagnose a failure of the hydraulic motor even more appropriately, the failure including at least one of sticking of the high-pressure valves in the open state, sticking of the low-pressure valves in the closed state, or sticking of the pistons.
(9) A method of diagnosing a power generating apparatus of renewable-energy type according to at least one embodiment of the present invention is for a power generating apparatus of renewable-energy type comprising a rotor configured to rotate by renewable energy, a hydraulic pump driven by the rotor, a hydraulic motor configured to be driven by pressurized oil produced by the hydraulic pump, and a generator configured to be driven by the hydraulic motor. The method comprises a step of detecting a failure of at least one of the hydraulic pump or the hydraulic motor by the method of diagnosing a hydraulic machine according to any one of the above (1) to (8).
   According to the above method (9), it is possible to perform failure diagnosis which is less likely to be influenced by a failure caused by a different factor from that of a failure due to a trouble of a cylinder unit. Thus, it is possible to diagnose a failure of a power generating apparatus of renewable-energy type appropriately, the failure including at least one of sticking of the high-pressure valves in the open state, sticking of the low-pressure valves in the closed state, or sticking of the pistons. Further, since it is unnecessary to provide each of the plurality of cylinder units with a detection part such as an in-cylinder pressure sensor, it is possible to simplify the configuration and to reduce the cost.
(10) A diagnosis apparatus for a hydraulic machine according to at least one embodiment of the present invention is for a hydraulic machine comprising a rotation shaft, a high-pressure line, a low-pressure line, a plurality of cylinders, a plurality of pistons configured to be guided by the respective cylinders, a cam configured to reciprocate the pistons in conjunction with rotation of the rotation shaft, a plurality of high-pressure valves provided for respective working chambers formed by the cylinders and the pistons, for switching a communication state between the high-pressure line and the respective working chambers, and a plurality of low-pressure valves provided for the respective working chambers, for switching a communication state between the low-pressure line and the respective working chambers. The diagnosis apparatus comprises: a first sensor for obtaining a torque of the rotation shaft; and a failure detection part configured to detect a failure of the hydraulic machine, the failure including at least one of sticking of the high-pressure valves in an open state, sticking of the low-pressure valves in a closed state, or sticking of the pistons, on the basis of a standard deviation of the torque of the rotation shaft obtained by a measurement result of the first sensor in a no-load state of the hydraulic machine. The specific frequency is determined from a rotation speed ω of the rotation shaft and a cam-lobe number m of the cam.
   With the above configuration (10), it is possible to perform failure diagnosis which is less likely to be influenced by a failure caused by a different factor from that of a failure due to a trouble of a cylinder unit. Thus, it is possible to diagnose a failure of a hydraulic machine appropriately, the failure including at least one of sticking of the high-pressure valves in the open state, sticking of the low-pressure valves in the closed state, or sticking of the pistons. Further, since it is unnecessary to provide each of the plurality of cylinder units with a detection part such as an in-cylinder pressure sensor, it is possible to simplify the configuration and to reduce the cost.
(11) In some embodiments, in the above configuration (10), the hydraulic machine comprises a hydraulic pump for producing pressurized oil, the cam of the hydraulic pump includes a plurality of cam lobes arranged in a circumferential direction of the rotation shaft, and the failure detection part is configured to detect a failure of the hydraulic pump on the basis of a magnitude of the fluctuation component of the specific frequency represented by ω × m or ω² × m (where m is an integer not less than two) from among a torque fluctuation of the rotation shaft, a pressure fluctuation in the high-pressure line, and an output fluctuation of the hydraulic machine.
   If a failure occurs in only one of the plurality of cylinder units, the influence of the cylinder unit with the failure appears remarkably as the fluctuation component of the specific frequency represented by ω × m or ω² × m (where m is an integer not less than two) determined from the rotation speed ω of the rotation shaft and the number m of the cam lobes of the cam, because the piston reciprocates in the cylinder cyclically in accordance with the cam lobes. Thus, with the above configuration (11), it is possible to eliminate influence due to other factors and detect a failure of the hydraulic machine appropriately, the failure including at least one of sticking of the high-pressure valves in the open state, sticking of the low-pressure valves in the closed state, or sticking of the pistons.
(12) In some embodiments, in the above configuration (10) or (11), the failure detection part is configured to monitor whether the fluctuation component exceeds a threshold value during operation of the hydraulic machine, and output a command to halt operation of the hydraulic machine to the hydraulic machine if the fluctuation component exceeds the threshold value.
   With the above configuration (12), it is determined that there is a failure if the magnitude of the fluctuation component of the specific frequency is greater than the threshold value, which makes it possible to determine a failure of the hydraulic machine easily, the failure including at least one of sticking of the high-pressure valves in the open state, sticking of the low-pressure valves in the closed state, or sticking of the pistons.
(13) In some embodiments, in the above configurations (10) to (12), the hydraulic machine comprises a hydraulic pump for producing pressurized oil, and the failure-detection part is configured to detect a failure of the hydraulic pump on the basis of the standard deviation of the torque of the rotation shaft of the hydraulic pump at the time when the hydraulic pump is not pumping.
   With the above configuration (13), a failure of the hydraulic pump is detected on the basis of the standard deviation of the torque of the rotation shaft at the time when the hydraulic pump is not pumping. Thus, it is possible to maintain the no-load state securely, which makes it possible to diagnose a failure appropriately using the standard deviation of the torque.
(14) In some embodiments, in the above configurations (10) to (13), the hydraulic machine comprises a hydraulic motor for driving a generator, and the failure-detection part is configured to detect a failure of the hydraulic motor on the basis of the standard deviation of the torque of the rotation shaft during no-load rotation of the hydraulic motor immediately after the generator is connected to a grid.
   With the above configuration (14), the failure detection based on the standard deviation of the torque of the rotation shaft is performed on the hydraulic motor utilizing the above no-load rotation immediately after the generator is connected to a grid upon connection of the generator (or a predetermined period from immediately before the connection to immediately after the connection may be included), it is possible to diagnose a failure without interrupting normal operation.
(15) A power generating apparatus of renewable-energy type according to at least one embodiment of the present invention comprises: a rotor configured to rotate by renewable energy; a hydraulic pump driven by the rotor; a hydraulic motor configured to be driven by pressurized oil produced by the hydraulic pump; a generator configured to be driven by the hydraulic motor; and the diagnosis apparatus according to any one of claims 10 to 14. The diagnosis apparatus is configured to detect a failure of at least one of the hydraulic pump or the hydraulic motor.

With the above configuration (15), it is possible to perform failure diagnosis which is less likely to be influenced by a failure caused by a different factor from that of a failure due to a trouble of a cylinder unit. Thus, it is possible to diagnose a failure of a power generating apparatus of renewable-energy type appropriately, the failure including at least one of sticking of the high-pressure valves in the open state, sticking of the low-pressure valves in the closed state, or sticking of the pistons. Further, since it is unnecessary to provide each of the plurality of cylinder units with a detection part such as an in-cylinder pressure sensor, it is possible to simplify the configuration and to reduce the cost.

According to at least one embodiment of the present invention, it is possible to perform failure diagnosis which is less likely to be influenced by a failure caused by a different factor from that of a failure due to a trouble of a cylinder unit. Thus, it is possible to diagnose a failure of a hydraulic machine appropriately, the failure including at least one of sticking of the high-pressure valves in the open state, sticking of the low-pressure valves in the closed state, or sticking of the pistons. Further, since it is unnecessary to provide each of the plurality of cylinder units with a detection part such as an in-cylinder pressure sensor, it is possible to simplify the configuration and to reduce the cost.

### BRIEF DESCRIPTION OF DRAWINGS

FIG. 1 is a configuration diagram of a wind turbine generator including a failure diagnosis apparatus according to some embodiments.
FIG. 2 is a configuration diagram of a hydraulic pump according to one embodiment.
FIG. 3 is a configuration diagram of a hydraulic motor according to one embodiment.
FIG. 4 is a flowchart of a method of diagnosing a failure according to one embodiment.
FIG. 5 is a graph showing a pressure spectrum of a high-pressure line of a hydraulic pump.
FIGs. 6A to 6D are graphs showing the time-series change of: a rotation speed of a hydraulic pump; an active-frequency command value Fd; a torque of a rotation shaft; and a pressure inside a cylinder (in-cylinder pressure).
FIGs. 7A and 7B are diagrams illustrating results of frequency analysis on the torque of the rotation shaft and the pressure of a high-pressure line, respectively.
FIG. 8 is a flowchart of a method of diagnosing a failure according to another embodiment.
FIGs. 9A-1 to 9D-1 are graphs showing the time-series change of: a rotation speed of a hydraulic pump; a torque of a rotation shaft; a pressure inside a cylinder (in-cylinder pressure); and standard deviation of the torque of the rotation shaft, during normal operation. FIGs. 9A-2 to 9D-2 are graphs showing a magnified view of the no-load period in FIGs. 9A-1 to 9D-1.
FIGs.10A-1 to 10D-1 are graphs showing the time-series change of: a rotation speed of a hydraulic pump; a torque of a rotation shaft; a pressure inside a cylinder (in-cylinder pressure); and standard deviation of the torque of the rotation shaft, at the time when there is failure. FIGs. 10A-2 to 10D-2 are graphs showing a magnified view of the no-load period in FIGs. 10A-1 to 10D-1.
FIG. 11 is a flowchart of a method of diagnosing a failure according to another embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

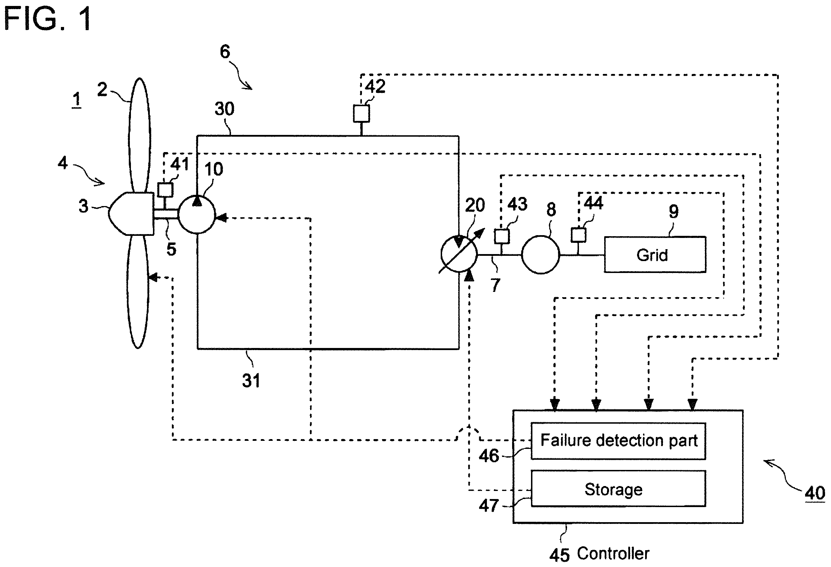

Firstly, with reference to FIG. 1, a wind turbine generator 1 will be described as a power generating apparatus of renewable-energy type to which a diagnosis apparatus 40 according to the present embodiment is applied. FIG. 1 is a schematic configuration diagram of a wind turbine generator 1 according to some embodiments. However, the diagnosis apparatus 40 according to the present embodiment can be applied to other power generating apparatuses of renewable-energy type such as a tidal current power generator, an ocean current generator, and a river current generator.

As illustrated in FIG. 1, the wind turbine generator 1 according to some embodiments includes a rotor 4 including at least one blade 2 and a hub 3, a rotation shaft 5 which rotates along with the rotor 4, a hydraulic transmission 6 which increases the rotation speed of the rotor 4, and a generator 8 to which rotational energy of the rotor 4 is inputted via the hydraulic transmission 6.

At least one blade 2 is mounted to the hub 3 of the rotor 4, so that the at least one blade 2 rotates together with the hub 3 by receiving wind. The rotation shaft 5 is connected to the hub 3. The entire rotor 4 rotates by the force of wind received by the at least one blade 2, and the rotation is inputted to the hydraulic transmission 6 via the rotation shaft 5.

The hydraulic transmission 6 includes a hydraulic pump 10 of variable-displacement type, a hydraulic motor 20 of variable-displacement type, a high-pressure line 30, and a low-pressure line 31.

The hydraulic pump 10 is configured to be driven by mechanical rotational energy inputted into the rotation shaft 5.

The hydraulic motor 20 is configured to be driven by pressurized oil from the hydraulic pump 10. The generator 8 connected to a grid 9 is coupled to an output shaft (rotatable shaft) 7 of the hydraulic motor 20.

The high-pressure line 30 is disposed between an outlet of the hydraulic pump 10 and an inlet of the hydraulic motor 20 and configured to direct pressurized oil (high-pressure oil) produced in the hydraulic pump 10 to the hydraulic motor 20.

The low-pressure line 31 is disposed between an outlet of the hydraulic motor 20 and an inlet of the hydraulic pump 10 and configured to direct working oil (low-pressure oil) discharged from the hydraulic motor 20 to the hydraulic pump 10.

In the above hydraulic transmission 6, the high-pressure oil produced by the hydraulic pump 10 flows into the hydraulic motor 20 via the high-pressure line 30 and drives the hydraulic motor 20. The low-pressure oil having performed work in the hydraulic motor 20 flows into the hydraulic pump 10 via the low-pressure line 31, is pressurized by the hydraulic pump 10, and flows again into the hydraulic motor 20 via the high-pressure line 30. The generator 8 connected to a grid 9 is coupled to an output shaft (rotatable shaft) 7 of the hydraulic motor 20. Rotation inputted into the hydraulic pump 10 of the hydraulic transmission 6 has its speed increased by the hydraulic transmission 6, and then, is inputted to the generator 8.

While the hydraulic transmission 6 illustrated in FIG. 1 includes only one hydraulic motor 20, a plurality of hydraulic motors 20 may be provided and each of the hydraulic motors 20 may be connected to the hydraulic pump 10. In the case where a plurality of hydraulic motors 20 is to be provided, each hydraulic motor 20 may be provided with a single generator 8, or a plurality of hydraulic motors 20 sharing an output shaft 7 may be provided with a single generator 8. Further, the generator 8 may be a synchronous generator disposed coaxially with the hydraulic motor 20.

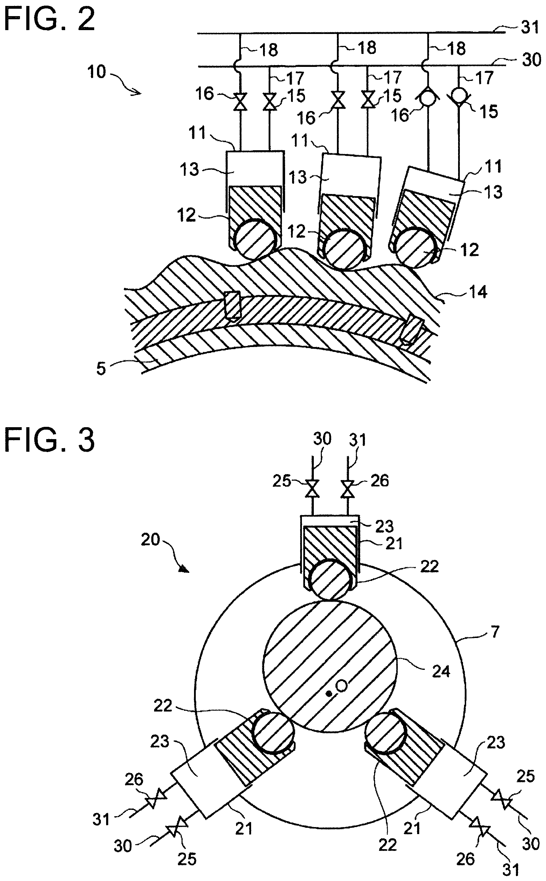

The configuration example of the hydraulic pump 10 and the hydraulic motor 20 will now be described specifically. FIG. 2 is a configuration diagram of a hydraulic pump 10 according to one embodiment. FIG. 3 is a configuration diagram of a hydraulic motor 20 according to one embodiment. In FIGs. 2 and 3, the hydraulic pump 10 includes a multi-lobed cam 14 and the hydraulic motor 20 includes an eccentric cam 24. However, the type of the cam is not limited thereto.

In one embodiment, the hydraulic pump 10 illustrated in FIG. 2 includes a plurality of pistons 12, a plurality of cylinders 11 configured to guide the respective pistons 12 reciprocably and forming a plurality of working chambers 13 together with the plurality of pistons 12, a cam (multi-lobed cam) 14 having a cam curved surface of a wavy shape which engages with the plurality of pistons 12, and a high-pressure valve 15 and a low-pressure valve 16 provided for each of the working chambers 13. Each high-pressure valve 15 is disposed in a high-pressure communication channel 17 between corresponding one of the working chambers 13 and the high-pressure line 30, while each low-pressure valve 16 is disposed in a low-pressure communication channel 18 between corresponding one of the working chambers 13 and the low-pressure line 31. For instance, as the high-pressure valves 15, check valves which permit only the flow of working oil flowing toward the high-pressure line 30 from the working chambers 13 may be used, while using solenoid valves as the low-pressure valves 16. Further, in the present embodiment, a piston 12, a cylinder 11 guiding the piston 12, and a high-pressure valve 15 and a low-pressure valve 16 corresponding to the cylinder 11 are collectively referred to as a cylinder unit.

While the hydraulic pump 10 is operating, rotation of the cam 14 along with the rotation shaft 5 moves the pistons 12 upward and downward cyclically in accordance with cam lobes, so that each piston 12 repeats a pump stroke of moving from a bottom dead center toward a top dead center and a suction stroke of moving from a top dead center toward a bottom dead center. Thus, the capacity of the working chambers 13 formed by the pistons 12 and the inner wall surfaces of the cylinders 11 changes cyclically.

The hydraulic pump 10 is capable of switching the state of each working chamber 13 to an active state or an inactive state by opening and closing the corresponding high-pressure valve 15 and low-pressure valve 16. If the working chamber 13 is in the active state, the high-pressure valve 15 is closed and the low-pressure valve 16 is opened during the suction stroke to cause working oil to flow into the working chamber 13 from the low-pressure line 31, and the high-pressure valve 15 is opened and the low-pressure valve 16 is closed during the pump stroke to send out the compressed working oil from the working chamber 13 to the high-pressure line 30. On the other hand, if the working chamber 13 is in the inactive state, during both of the suction stroke and the pump stroke, the high-pressure valve 15 is maintained to be closed and the low-pressure valve 16 is maintained to be open, so as to reciprocate the working oil between the working chamber 13 and the low-pressure line 31 (i.e., working oil is not sent out to the high-pressure line 30). In this way, the displacement of the hydraulic pump 10 as a whole can be adjusted by changing the rate of the number of the working chambers 13 in the active state to the total number of working chambers.

In one embodiment, the hydraulic motor 20 illustrated in FIG. 3 includes a plurality of working chambers 23 formed by cylinders 21 and pistons 22, a cam 24 having a cam curved surface which engages with the pistons 22, and a high-pressure valve 25 and a low-pressure valve 26 provided for each of the working chambers 23. The high-pressure valve 25 is disposed between corresponding one of the working chambers 23 and the high-pressure line 30, while the low-pressure valve 26 is disposed between corresponding one of the working chambers 23 and the low-pressure line 31. Further, in the present embodiment, a piston 22, a cylinder 21 guiding the piston 22, and a high-pressure valve 25 and a low-pressure valve 26 corresponding to the cylinder 21 are collectively referred to as a cylinder unit.

While the hydraulic motor 20 is operating, the differential pressure between the high-pressure line 30 and the low-pressure line 31 created by the hydraulic pump 10 moves the pistons 22 upward and downward cyclically, so that each piston 22 repeats a motoring stroke of moving toward a bottom dead center from a top dead center and a discharge stroke of moving toward a top dead center from a bottom dead center. Thus, the capacity of the working chambers 23 formed by the pistons 22 and the inner wall surfaces of the cylinders 21 changes cyclically.

The hydraulic motor 20 is capable of switching the state of each working chamber 23 to an active state or an inactive state by opening and closing the corresponding high-pressure valve 25 and the corresponding low-pressure valve 26. If the working chamber 23 is in the active state, the high-pressure valve 25 is opened and the low-pressure valve 26 is closed during the motoring stroke to cause pressurized oil to flow into the working chamber 23 from the high-pressure line 30, and the high-pressure valve 25 is closed and the low-pressure valve 26 is opened during the discharge stroke to send out the pressurized oil having performed work in the working chamber 23 to the low-pressure line 31. On the other hand, if the working chamber 23 is in the inactive state, during both of the motoring stroke and the discharge stroke, the high-pressure valve 25 is maintained to be closed and the low-pressure valve 26 is maintained to be open, so as to reciprocate the pressurized oil between the working chamber 23 and the low-pressure line 31 (i.e., high-pressure oil from the high-pressure line 30 is not accepted into the working chamber 23). In this way, the displacement of the hydraulic motor 20 as a whole can be adjusted by changing the rate of the number of the working chambers 23 in the active state to the total number of working chambers, similarly to the hydraulic pump 10.

In the present embodiment, the following configuration is further provided in order to diagnose a failure due to a trouble of a component constituting a cylinder unit of a hydraulic machine including the above hydraulic pump 10 or hydraulic motor 20.

As illustrated in FIG. 1, a failure diagnosis apparatus 40 according to some embodiments includes at least one of: torque sensors 41, 43 for obtaining torques of the rotation shafts 5, 7; a pressure sensor 42 for obtaining a pressure in the high-pressure line 30; or an output sensor 44 for obtaining an output of the hydraulic machine. For example, a generator output is described as an output of the hydraulic machine.

Further, the failure diagnosis apparatus 40 includes a controller 45 including a failure detection part 46 for detecting a failure due to a trouble of a component constituting a cylinder unit on the basis of detection signals from the sensors 41, 42, 43, 44. The controller 45 may further include a storage 47 for storing the following threshold value or the like.

The failure detection part 46 is configured to detect a failure of the hydraulic machine on the basis of at least one of: a fluctuation component of a specific frequency determined by a rotation speed ω of the rotation shafts 5, 7 and the number of cam lobes m of the cam 14, from among fluctuation components of the torque of the rotation shafts 5, 7, the pressure of the high-pressure line 30, and the output of the hydraulic machine, obtained from measurement results measured by the sensors 41, 42, 43, 44; or the standard deviation of the torque which can be obtained from the measurement results of the sensors 41, 43 in a no-load state of the hydraulic machine. The failure includes at least one of: sticking of the high-pressure valves 15, 25 in an open state; sticking of the low-pressure valves 16, 26 in a closed state; or sticking of the pistons 12, 22.

A method of diagnosing a failure of a hydraulic machine according to some embodiments includes a step of detecting a failure of a hydraulic machine on the basis of at least one of: a fluctuation component of a specific frequency determined by a rotation speed ω of the rotation shafts 5, 7 and the number m of cam lobes of the cam 14, from among a torque fluctuation of the rotation shafts 5, 7, a pressure fluctuation of the high-pressure line 30, and an output fluctuation of the hydraulic machine; or the standard deviation of torque of the rotation shafts 5, 7 in a no-load state of the hydraulic machine. The failure includes at least one of: sticking of the high-pressure valves 15, 25 in the open state, sticking of the low-pressure valves 16, 26 in the closed state; or sticking of the pistons 12, 22.

While the hydraulic motor 20 illustrated in FIG. 3 includes the eccentric cam 24, the above embodiment is applied to a case in which the hydraulic motor 20 has a multi-lobed cam (see FIG. 2) with cam lobes.

With the above configuration, it is possible to perform failure diagnosis which is less likely to be affected by a failure caused by a factor other than a failure due to a trouble of a cylinder unit of the hydraulic machine (hydraulic pump 10 or the hydraulic motor 20). Thus, it is possible to diagnose a failure of a hydraulic machine appropriately, the failure including at least one of sticking of the high-pressure valves 15, 25 in the open state, sticking of the low-pressure valves 16, 26 in the closed state, or sticking of the pistons 12, 22. Further, since it is unnecessary to provide each of the plurality of cylinder units with a detection part such as an in-cylinder pressure sensor, it is possible to simplify the configuration and reduce the cost.

In one embodiment, the storage 47 stores a threshold value related to fluctuation used in diagnosing a failure, from among fluctuation of the torque of the rotation shafts 5, 7, the pressure fluctuation in the high-pressure line 30, or the output fluctuation of the hydraulic machine.

To the failure detection part 46, detection signals are inputted from the sensors 41, 42, 43, 44 for detecting a parameter used in diagnosing a failure (at least one of the torque of the rotation shafts 5, 7, the pressure of the high-pressure line 30, or the output of the hydraulic machine). The failure detection part 46 extracts a fluctuation component of a specific frequency of a parameter used in diagnosing a failure on the basis of the detection signals. At this time, a fluctuation component of a specific frequency of a parameter may be extracted from a detection signal of the parameter by frequency analysis using fast Fourier transform (FFT), for instance. Then, in the failure detection part 46, the fluctuation component of the specific frequency is compared to the threshold value stored in the storage 47, and if the magnitude of the fluctuation component of the specific frequency is greater than the threshold value, it is determined that at least one of sticking of the high-pressure valves 15, 25 in the open state, sticking of the low-pressure valves 16, 26 in the closed state, or sticking of the pistons 12, 22 is occurring.

As described above, it is determined that there is a failure if the magnitude of the fluctuation component of the specific frequency of the parameter is greater than the threshold value, which makes it possible to determine a failure of the hydraulic machine easily, the failure including at least one of sticking of the high-pressure valves 15, 25 in the open state, sticking of the low-pressure valves 16, 26 in the closed state, or sticking of the pistons 12, 22.

In another embodiment, the storage 47 stores a threshold value related to the standard deviation of torque of the rotation shafts 5, 7.

To the failure detection part 46, detection signals are inputted from the torque sensors 41, 43. Then, in the failure detection part 46, the standard deviation of torque in the no-load state obtained from the measurement results of the torque sensors 41, 43 is compared to the threshold value stored in the storage 47, and if the standard deviation of the torque in the no-load state is greater than the threshold value, it is determined that at least one of sticking of the high-pressure valves 15, 25 in the open state, sticking of the low-pressure valves 16, 26 in the closed state, or sticking of the pistons 12, 22 is occurring.

For instance, if a sticking failure of the high-pressure valves 15, 22 is occurring in only one of the plurality of cylinder units, there is substantially no influence from other factors while the hydraulic machine is in the no-load state, because the other pistons 12, 22 are not operating, and only the influence from the cylinder unit with the sticking failure appears remarkably in the torque of the rotation shafts 5, 7. Thus, according to the above embodiment, it is possible to eliminate influence due to other factors and detect sticking of the high-pressure valves 15, 25 in the open state appropriately. Further, if sticking is occurring in the pistons 12, 22, a trouble may occur in a cylinder unit depending on the stroke position with sticking. For instance, if one of the pistons 12, 22 is sticking in the vicinity of the bottom dead center, an excessive load may be applied to the cam surface from a sliding part (e.g. a roller or a shoe) of the piston 12, 22. In this case, the torque of the rotation shafts 5, 7 exhibits a remarkable fluctuation. Thus, it is possible to detect sticking of the pistons 12, 22 appropriately.

Next, as a specific example, applications of the failure diagnosis according to the present embodiment to the hydraulic pump 10 and the hydraulic motor 20 will be described individually.

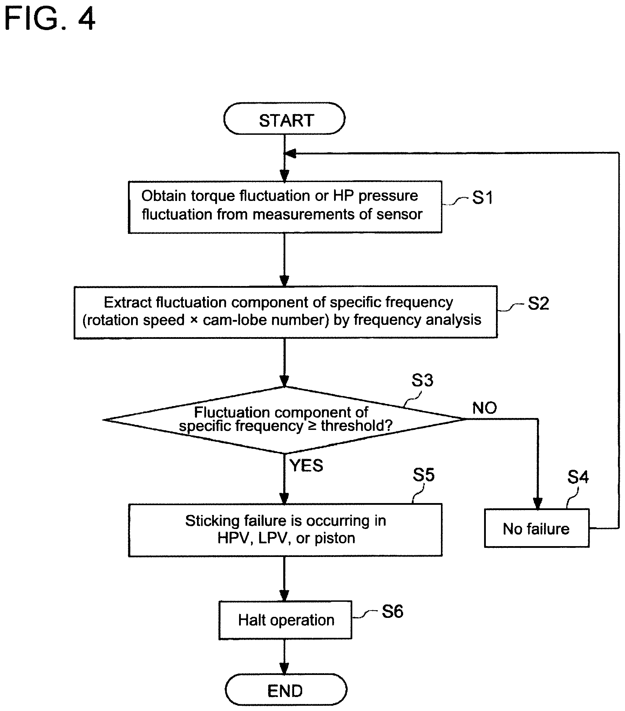

First, with reference to FIGs. 4 to 6, diagnosing a failure of the hydraulic pump 10 using a fluctuation component of a specific frequency will be described.

FIG. 4 is a flowchart of a method of diagnosing a failure according to one embodiment. Each part of the hydraulic pump 10 is indicated by the same reference signs used in FIG. 2.

As illustrated in FIGs. 1 and 4, the hydraulic pump 10 includes the cam (multi-lobed cam) 14 with a plurality of cam lobes arranged in the circumferential direction of the rotation shaft 5.

In the method of diagnosing a failure of the hydraulic pump 10 according to one embodiment, in step S1, the failure detection part 46 obtains at least one of a torque fluctuation of the rotation shaft 5 or a pressure fluctuation in the high-pressure line 30, on the basis of at least one of a measurement result of the torque sensor 41 for detecting the torque fluctuation of the rotation shaft 5 or a measurement result of the pressure sensor 42 in the high-pressure line 30. Next, in step S2, the failure detection part 46 extracts a fluctuation component of a specific frequency by performing frequency analysis on at least one of the torque fluctuation of the rotation shaft 5 or the pressure fluctuation in the high-pressure line 30. The specific frequency is a frequency determined by the rotation speed ω of the rotation shaft 5 and the number m of cam lobes of the cam 14, which is, specifically, a frequency obtained from ω × m (where m is an integer not less than two). Alternatively, the specific frequency may be ω² × m (where m is an integer not less than two).

Then, in step S3, in the failure detection part 46, the fluctuation component of the specific frequency obtained in step S2 is compared to the threshold value stored in the storage 47. If the fluctuation component of the specific frequency is smaller than the threshold value, it is determined that there is no failure in step S4. On the other hand, if the fluctuation component of the specific frequency is larger than the threshold value, a failure of the hydraulic machine is detected in step S5, the failure including at least one of sticking of the high-pressure valves 15 in the open state, sticking of the low-pressure valves 16 in the closed state, or sticking of the pistons 12, 22. The diagnosis method according to the present embodiment is particularly suitable in detecting a failure which is sticking of the high-pressure valves 15 in the open state or sticking of the pistons 12. While at least one of the torque fluctuation of the rotation shaft 5 or pressure fluctuation in the high-pressure line 30 is used to diagnose a failure in the above embodiment, the output fluctuation of the hydraulic pump 10 may be used. If occurrence of a failure is detected in step S5, operation of the hydraulic pump 10 is halted in step S6.

For instance, if sticking occurs in the high-pressure valve 15 in the open state, high-pressure oil keeps flowing into the working chamber 13, and the in-cylinder pressure of the cylinder 11 may become excessively high. Similarly, if sticking occurs in the low-pressure valve 16 in the closed state, high-pressure oil in the working chamber 13 no longer flows out, and the in-cylinder pressure of the cylinder 11 may become excessively high. The influence of the in-cylinder pressure having become excessively high normally appears in the torque of the rotation shaft 5 or the pressure in the high-pressure line 30. If a sticking failure of the high-pressure valve 15 or the low-pressure valve 16 occurs in only one of the plurality of cylinder units, the influence of the cylinder unit with the sticking failure appears remarkably as a fluctuation component of a specific frequency of ω × m or ω² × m (where m is an integer not less than two) determined from the rotation speed ω of the rotation shaft 5 and the number m of the cam lobes of the cam, because the piston 12 reciprocates in the cylinder 11 cyclically in accordance with the cam lobes. Although a fluctuation component may appear in the torque of the rotation shaft 5 or the pressure in the high-pressure line 30 due to other factors when the load is high, for instance, the fluctuation component would not appear at the above specific frequency unless the cyclic reciprocating motion of the piston 12 is affected. Thus, according to the above embodiments, it is possible to eliminate an influence due to other factors and detect sticking of the high-pressure valves 15 in the open state or sticking of the low-pressure valves 16 in the closed state appropriately.

Further, if sticking is occurring in one of the pistons 12, a trouble may occur in a cylinder unit depending on the stroke position with sticking. For instance, if one of the pistons 12 is sticking in the vicinity of the bottom dead center, an excessive load may be applied to the cam surface from a sliding part (e.g. a roller or a shoe) of the piston 12 in a region where the sliding part of the piston 12 moves toward the top portion of the cam 14. In this case, in e.g. the torque of the rotation shaft 5, the fluctuation component of the specific frequency of ω × m or ω² × m (where m is an integer not less than two) determined from the rotation speed ω of the rotation shaft 5 and the number m of the cam lobes of the cam appears remarkably. Thus, according to the above embodiments, it is possible to eliminate an influence due to other factors and detect sticking of the pistons 12 appropriately.

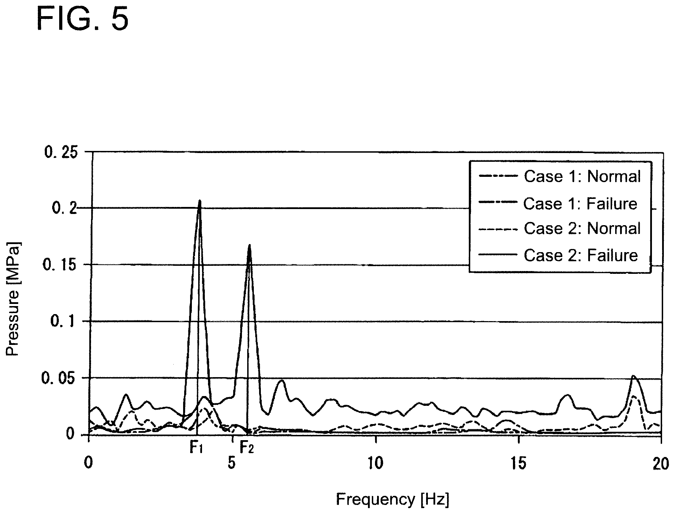

FIGs. 5 to 7 are drawings related to a sticking failure of a high-pressure valve.

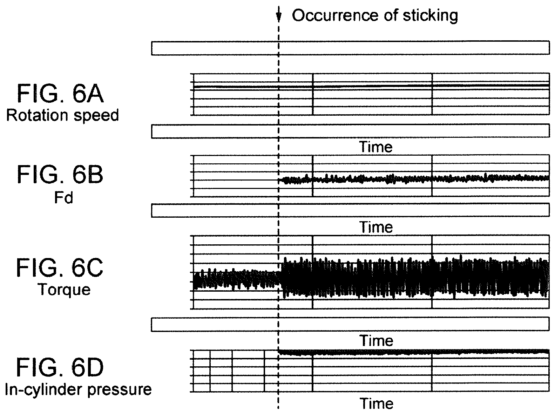

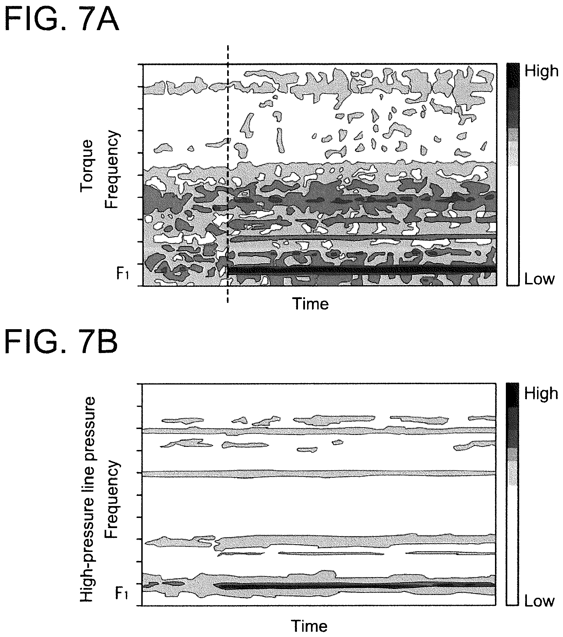

FIG. 5 is a graph showing a pressure spectrum of the high-pressure line of the hydraulic pump. FIGs. 6A to 6D are graphs showing the time-series change of: a rotation speed of the hydraulic pump; an active-frequency command value Fd; a torque of a rotation shaft; and a pressure inside a cylinder, which is an in-cylinder pressure, respectively. FIGs. 7A and 7B are diagrams illustrating results of frequency analysis on a torque of the rotation shaft and a pressure of a high-pressure line, respectively. The active-frequency command value Fd represents a ratio of active cylinders to the entire cylinders.

FIG. 5 is a diagram comparing the pressure spectrum of the high-pressure line 30 in normal operation and that at the time of failure, in each of cases 1 and 2 with varied Fd. The time of failure refers to the time when a sticking failure of the high-pressure valve 15 is occurring.

In case 1, the pressure of the high-pressure line 30 is substantially constant during normal operation regardless of the frequency. In contrast, at the time of failure, the pressure of the high-pressure line 30 is outstandingly high at the specific frequency F₁. The specific frequency F₁ corresponds to ω × m determined from the rotation speed ω of the rotation shaft 5 and the number m of the cam lobes of the cam.

Similarly, in case 2, while the pressure of the high-pressure line 30 is substantially constant during normal operation regardless of the frequency, the pressure of the high-pressure line 30 is outstandingly high at the specific frequency F₂ at the time of failure. Also in case 2, the specific frequency F₂ corresponds to ω × m determined from the rotation speed ω of the rotation shaft 5 and the number m of the cam lobes of the cam.

As clearly shown in the drawings, when a sticking failure of the high-pressure valves 15 occurs, the pressure fluctuation of the high-pressure line 30 remarkably appears as a fluctuation component of a specific frequency of ω × m determined from the rotation speed ω of the rotation shaft 5 and the number m of the cam lobes of the cam. In other words, it is clear that there is a close relationship between a sticking failure of the high-pressure valves 15 and a fluctuation component of a specific frequency of ω × m determined from the rotation speed ω of the rotation shaft 5 and the number m of the cam lobes of the cam.

FIG. 6A shows the time-series change of the rotation speed of the hydraulic pump 10. FIG. 6B shows the time-series change of the active-frequency command value Fd. FIG. 6C shows the time-series change of the torque of the rotation shaft 5. FIG. 6D shows the time-series change of a pressure inside a cylinder (in-cylinder pressure).

When a sticking failure of a high-pressure valve occurs, the rotation speed stays constant as illustrated in FIG. 6A, but the fluctuation of the active-frequency command value Fd and the torque fluctuation of the rotation shaft 5 increase from the time of occurrence of the sticking failure, as illustrated in FIG.s 6B and 6C. Further, as illustrated in FIG. 6D, the in-cylinder pressure also increases from the time of occurrence of the sticking failure.

While it may be determined that there is a failure in the hydraulic pump 10 on the basis of the above results, it is difficult to determine whether the failure is caused in a cylinder unit or is due to another factor.

In this regard, referring to the result of the frequency analysis on the torque of the rotation shaft 5 illustrated in FIG. 7A, the torque fluctuation at the specific frequency F₁ appears remarkably from the time of occurrence of the failure. Further, referring to the result of the frequency analysis on the pressure of the high-pressure line 30 illustrated in FIG. 7B, the torque fluctuation at the specific frequency F₁ appears remarkably from the time of occurrence of the failure. Thus, it is possible to determine that the failure is sticking of the high-pressure valves 15 in the open state. While a sticking failure of the high-pressure valves 15 in the open state is detected in the illustrated example, a sticking failure of the low-pressure valves 16 in the closed state or a sticking failure of the pistons 12 can be determined similarly.

Further, as described above, the failure diagnosis using the fluctuation component of a specific frequency can be applied to other hydraulic machines such as the hydraulic motor 20.

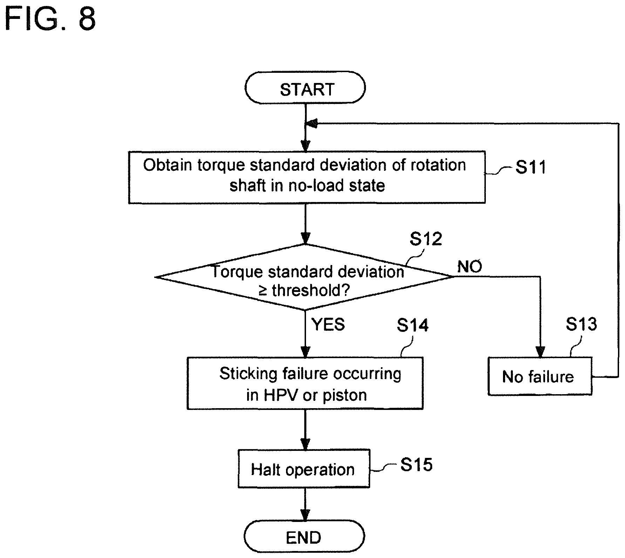

Next, with reference to FIGs. 8 to 10, diagnosing a failure of the hydraulic pump 10 using the standard deviation of the torque of the rotation shaft 5 will be described. FIG. 8 is a flowchart of a method of diagnosing a failure according to another embodiment. Each part of the hydraulic pump 10 is indicated by the same reference signs used in FIG. 2.

As illustrated in FIGs. 1 and 8, in the method of diagnosing a failure of the hydraulic pump 10 according to another embodiment, in step S11, the failure detection part 46 obtains the standard deviation of the torque of the rotation shaft 5 in the no-load state of the hydraulic pump 10, on the basis of a measurement result of the torque sensor 41 for detecting the torque fluctuation of the rotation shaft 5. The standard deviation of the torque can be obtained when the rotation speed of the hydraulic pump 10 is not less than a set value. In this way, the failure appears remarkably in the standard deviation of the torque, which enables more appropriate failure diagnosis. Further, the no-load state of the hydraulic pump 10 is achieved when the hydraulic pump 10 is not pumping. For instance, the pumping of the hydraulic pump 10 is halted by switching the state of the working chambers 13 of all of the cylinder units to an inactive state (Fd=0). Then, in step S12, the failure detection part 46 compares the standard deviation of the torque to the threshold value stored in the storage 47. If the standard deviation of the torque is smaller than the threshold value, it is determined that there is no failure in step S13. On the other hand, if the standard deviation of the torque is larger than the threshold value, a failure of the hydraulic machine is detected in step S14, the failure including at least one of sticking of the high-pressure valves 15, 25 in the open state or sticking of the pistons 12, 22. If a failure is detected, operation of the hydraulic pump 10 is halted in step S15.

Thus, according to the above embodiments, it is possible to eliminate influence due to other factors and detect a failure of the hydraulic machine including at least one of sticking of the high-pressure valves 15 in the open state or sticking of the pistons 12 appropriately.

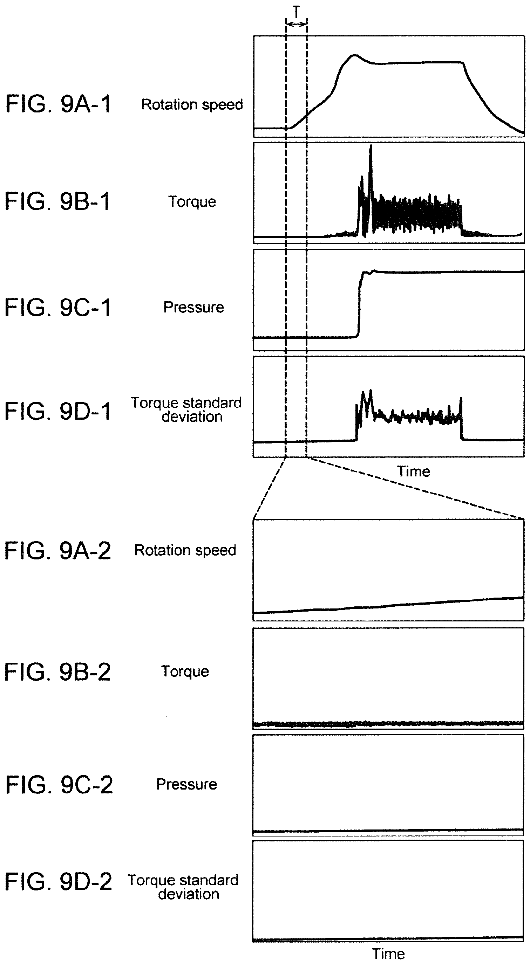

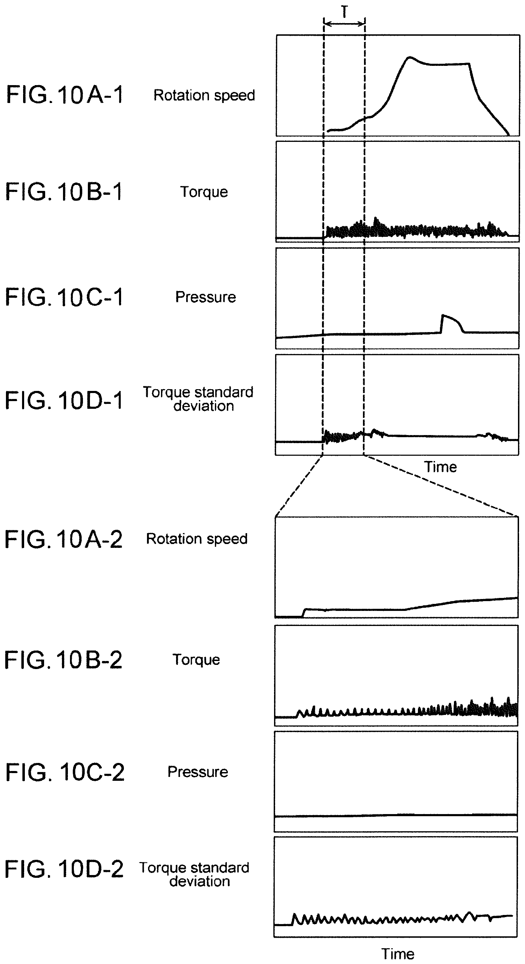

FIGs.9A-1 to 9D-2 are graphs showing time-series changes during normal operation. FIG. 9A-1 shows the time-series change of the rotation speed of the hydraulic pump 10. FIG. 9B-1 shows the time-series change of the torque of the rotation shaft 5. FIG. 9C-1 shows the time-series change of the pressure inside the cylinder (in-cylinder pressure). FIG. 9D-1 shows the time-series change of the standard deviation of the torque of the rotation shaft 5. FIGs. 9A-2 to 9D-2 are graphs showing the no-load period T of FIGs. 9A-1 to 9D-1 in a magnified view. FIGs.10A-1 to 10D-2 are graphs showing time-series changes during the time of failure. FIG. 10A-1 shows the time-series change of the rotation speed of the hydraulic pump 10. FIG. 10B-1 shows the time-series change of the torque of the rotation shaft 5. FIG. 10C-1 shows the time-series change of the pressure inside the cylinder (in-cylinder pressure). FIG. 10D-1 shows the time-series change of the standard deviation of the torque of the rotation shaft 5. FIGs. 10A-2 to 10D-2 are graphs showing the no-load period T of FIGs. 10A-1 to 10D-1 in a magnified view. In the example illustrated in FIGs. 10A-1 to 10D-2, a sticking failure of the piston 12 is occurring.

During the normal operation illustrated in FIGs. 9A-1 to 9D-2, when the rotation speed is not less than a set value as shown in FIGs. 9A-1 and 9A-2, the standard deviation of the rotation shaft 5 is small in the no-load period T as shown in FIGs. 9D-1 and 9D-2.

On the other hand, during the time of failure illustrated in FIGs. 10A-1 to 10D-2, when the rotation speed is not less than a set value as shown in FIGs. 10A-1 and 10A-2, the standard deviation of the rotation shaft 5 is large in the no-load period T as shown in FIGs. 10D-1 and 10D-2.

Accordingly, if a sticking failure of the piston 12 occurs, the standard deviation increases in the no-load period T in which the hydraulic pump 10 is in the no-load state. Thus, it is possible to detect a failure appropriately by monitoring the standard deviation of the rotation shaft 5 at the time when the hydraulic pump 10 is in the no-load state. It is possible to detect a sticking failure of the high-pressure valves 15 similarly.

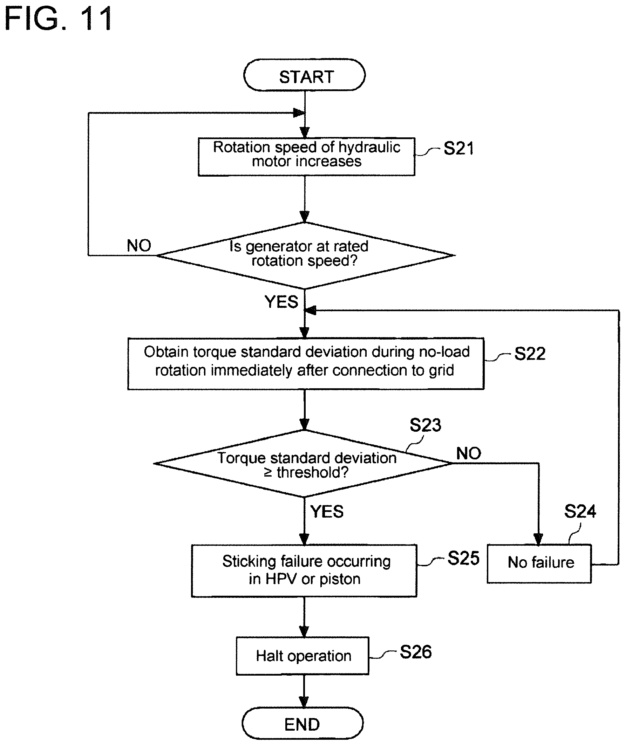

Further, with reference to FIG. 11, diagnosing a failure of the hydraulic motor 20 using the standard deviation of the torque of the rotation shaft 7 will be described. FIG. 11 is a flowchart of a method of diagnosing a failure according to another embodiment. Each part of the hydraulic motor 20 is indicated by the same reference signs used in FIG. 3.

As illustrated in FIG. 11, in the method of diagnosing a failure of the hydraulic motor 20 according to another embodiment, the rotation speed of the hydraulic motor 20 is increased in step S21. Once the generator 8 reaches a rated rotation speed, the failure detection part 46 obtains the standard deviation of the torque of the rotation shaft 7 at the time of no-load rotation of the hydraulic motor 20 immediately after connection of the generator 8 to the grid, in S22. The standard deviation of the torque can be obtained from the detection signal of the torque sensor 43. Then, in step S23, the failure detection part 46 compares the deviation standard of the torque to the threshold value stored in the storage 47. If the standard deviation of the torque is smaller than the threshold value, the failure detection part 46 determines that there is no failure of the hydraulic motor 20, in step S 24. On the other hand, if the standard deviation of the torque is larger than the threshold value, the failure detection part 46 determines that there is a sticking failure of the high-pressure valves 25 or a sticking failure of the pistons 22, in step S25. In this case, operation of the hydraulic motor 20 is halted in step S26.

According to the above embodiment, failure detection is performed when the generator 8 has reached the rated rotation speed and the hydraulic motor 20 is in the no-load state. Thus, the influence due to a trouble of a cylinder unit is remarkably reflected to the torque. Thus, it is possible to diagnose a failure of the hydraulic motor 20 even more appropriately, the failure including at least one of sticking of the high-pressure valves 25 in the open state, sticking of the low-pressure valves 26 in the closed state, or sticking of the pistons 22.

Furthermore, in a case where the hydraulic motor 20 is used as an off-grid power, the no-load rotation may be performed immediately after connection of the generator 8 to the grid 9 when the generator 8 is to be connected (the no-load rotation may be performed also during a certain period from immediately before the connection and immediately after the connection). Thus, if the failure detection based on the standard deviation of the torque of the rotation shaft 7 is performed on the hydraulic motor 20 utilizing the above no-load rotation, it is possible to diagnose a failure without interrupting normal operation.

According to at least one embodiment described above, it is possible to perform failure diagnosis which is less likely to be influenced by a factor other than a failure due to a trouble of a cylinder unit. Thus, it is possible to diagnose a failure of a hydraulic machine appropriately, the failure including at least one of sticking of the high-pressure valves 15, 25 in the open state, sticking of the low-pressure valves 16, 26 in the closed state, or sticking of the pistons 12, 22. Further, since it is unnecessary to provide each of the plurality of cylinder units with a detection part such as an in-cylinder pressure sensor, it is possible to simplify the configuration and reduce the cost.

For instance, while the hydraulic pump 10 and the hydraulic motor 20 of the wind turbine generator 1 are described as hydraulic machines in the above embodiment, the hydraulic machine of the present embodiment may be applied to hydraulic machines of other power generating apparatuses of renewable-energy type or other apparatuses using a hydraulic machine, besides the wind turbine generator 1.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A method of diagnosing a hydraulic machine which comprises a rotation shaft (5,7), a high-pressure line (30), a low-pressure line (31), a plurality of cylinders (11), a plurality of pistons (12) configured to be guided by the respective cylinders (11), a cam (14) configured to reciprocate the pistons (12) in conjunction with rotation of the rotation shaft (5,7), a plurality of high-pressure valves (15) provided for respective working chambers (13) formed by the cylinders (11) and the pistons (12), for switching a communication state between the high-pressure line (30) and the respective working chambers (13), and a plurality of low-pressure valves (16) provided for the respective working chambers (13), for switching a communication state between the low-pressure line (31) and the respective working chambers (13), the method comprising:
a step of detecting a torque of the rotation shaft (5,7) in a no-load state of the hydraulic machine, and
a step of detecting a failure of the hydraulic machine, the failure including at least one of sticking of the high-pressure valves (15) in an open state, sticking of the low-pressure valves (16) in a closed state, or sticking of the pistons (12), on the basis of at least a standard deviation of the torque,
wherein, if the standard deviation of the torque in the no-load state is greater than a threshold value, it is determined that at least one of sticking of the high-pressure valves (15) in the open state or sticking of the pistons (12) has occurred.

2. The method of diagnosing a hydraulic machine according to claim 1,
further comprising a step of detecting a fluctuation component of a specific frequency in addition to the standard deviation of the torque from among a torque fluctuation of the rotation shaft (5,7), a pressure fluctuation in the high-pressure line (30), and an output fluctuation of the hydraulic machine, the specific frequency being determined by a rotation speed ω of the rotation shaft (5,7) and a cam-lobe number m of the cam (14),
wherein, in the step of detecting the failure, the failure of the hydraulic machine is detected on the basis of the fluctuation component of the specific frequency in addition to the standard deviation of the torque.

3. The method of diagnosing a hydraulic machine according to claim 2,
wherein, if a magnitude of the fluctuation component of the specific frequency is greater than a threshold value, it is determined that at least one of sticking of the high-pressure valves (15) in the open state, sticking of the low-pressure valves (16) in the closed state, or sticking of the pistons (12), has occurred.

4. The method of diagnosing a hydraulic machine according to claim 2 or 3,
wherein the hydraulic machine comprises a hydraulic pump (10) for producing pressurized oil,
wherein the cam (14) of the hydraulic pump (10) includes a plurality of cam lobes arranged in a circumferential direction of the rotation shaft (5), and
wherein a failure of the hydraulic pump (10) is detected on the basis of the magnitude of the fluctuation component of the specific frequency represented by ω × m or ω² × m (where m is an integer not less than two) from among the torque fluctuation of the rotation shaft (5), the pressure fluctuation in the high-pressure line (30), and the output fluctuation of the hydraulic machine.

5. The method of diagnosing a hydraulic machine according to any one of claims 2 to 4,
wherein the step of detecting a failure of the hydraulic machine comprises monitoring whether the magnitude of the fluctuation component of the specific frequency exceeds a threshold value during operation of the hydraulic machine, and
wherein, if the fluctuation component exceeds the threshold value, the operation of the hydraulic machine is halted.

6. The method of diagnosing a hydraulic machine according to claim 1,
wherein the hydraulic machine comprises a hydraulic pump (10) for producing pressurized oil, and
wherein the step of detecting a failure of the hydraulic machine comprises detecting a failure of the hydraulic pump (10) on the basis of the standard deviation of the torque of the rotation shaft (5) of the hydraulic pump (10) at the time when the hydraulic pump (10) is not pumping.

7. The method of diagnosing a hydraulic machine according to claim 6,
wherein the hydraulic machine comprises a hydraulic motor (20) for driving a generator (9), and
wherein the step of detecting a failure of the hydraulic machine comprises detecting a failure of the hydraulic motor (20) on the basis of the standard deviation of the torque of the rotation shaft (7) during no-load rotation of the hydraulic motor (20) immediately after the generator (8) is connected to a grid (9).

8. The method of diagnosing a hydraulic machine according to claim 7, further comprising a step of increasing a rotation speed of the hydraulic motor (20) until the generator (8) reaches a rated rotation speed,
wherein the step of detecting a failure of the hydraulic machine comprises detecting a failure of the hydraulic motor (20) on the basis of the standard deviation of the torque of the rotation shaft (7) at the time when the generator (8) has reached the rated rotation speed and the hydraulic motor (20) is in the no-load state.

9. A method of diagnosing a power generating apparatus of renewable-energy type comprising a rotor (4) configured to rotate by renewable energy, a hydraulic pump (10) driven by the rotor (4), a hydraulic motor (20) configured to be driven by pressurized oil produced by the hydraulic pump (10), and a generator (8) configured to be driven by the hydraulic motor (20), the method comprising
a step of detecting a failure of at least one of the hydraulic pump (10) or the hydraulic motor (20) by the method of diagnosing a hydraulic machine according to any one of claims 1 to 8.

10. A diagnosis apparatus for a hydraulic machine which comprises a rotation shaft (5,7), a high-pressure line (30), a low-pressure line (31), a plurality of cylinders (11), a plurality of pistons (12) configured to be guided by the respective cylinders (11), a cam (14) configured to reciprocate the pistons (12) in conjunction with rotation of the rotation shaft (5,7), a plurality of high-pressure valves (15) provided for respective working chambers (13) formed by the cylinders (11) and the pistons (12), for switching a communication state between the high-pressure line (30) and the respective working chambers (13), and a plurality of low-pressure valves (16) provided for the respective working chambers (13), for switching a communication state between the low-pressure line (31) and the respective working chambers (13), the diagnosis apparatus comprising:
a first sensor for obtaining a torque of the rotation shaft (5,7), and
a failure detection part configured to detect a failure of the hydraulic machine, the failure including at least one of sticking of the high-pressure valves (15) in an open state, sticking of the low-pressure valves (16) in a closed state, or sticking of the pistons (12), on the basis of a standard deviation of the torque of the rotation shaft (5,7) obtained by a measurement result of the first sensor in a no-load state of the hydraulic machine,
wherein the failure detection part is configured to determine that at least one of sticking of the high-pressure valves (15) in the open state or sticking of the pistons (12) has occurred, if the standard deviation of the torque in the no-load state is greater than a threshold value.

11. The diagnosis apparatus for a hydraulic machine according to claim 10,
wherein the failure detection part is further configured to detect the failure of the hydraulic machine on the basis of a fluctuation component of a specific frequency from among fluctuation components of the torque, the pressure, and the output obtained from the measurement result of the second sensor, wherein the specific frequency is determined from a rotation speed ω of the rotation shaft (5,7) and a cam-lobe number m of the cam (14),

12. The diagnosis apparatus for a hydraulic machine according to claim 11,
wherein the hydraulic machine comprises a hydraulic pump (10) for producing pressurized oil,
wherein the cam (14) of the hydraulic pump (10) includes a plurality of cam lobes arranged in a circumferential direction of the rotation shaft (5), and
wherein the failure detection part is configured to detect a failure of the hydraulic pump (10) on the basis of a magnitude of the fluctuation component of the specific frequency represented by ω × m or ω² × m (where m is an integer not less than two) from among torque fluctuation of the rotation shaft (5), pressure fluctuation in the high-pressure line (30), and output fluctuation of the hydraulic machine.

13. The diagnosis apparatus for a hydraulic machine according to claim 11 or 12,
wherein the failure detection part is configured to monitor whether the fluctuation component exceeds a threshold value during operation of the hydraulic machine, and output a command to halt operation of the hydraulic machine to the hydraulic machine if the fluctuation component exceeds the threshold value.

14. The diagnosis apparatus for a hydraulic machine according to any one of claims 12 or 13,
wherein the hydraulic machine comprises a hydraulic pump (10) for producing pressurized oil, and
wherein the failure-detection part is configured to detect a failure of the hydraulic pump (10) on the basis of the standard deviation of the torque of the rotation shaft (5) of the hydraulic pump (10) at the time when the hydraulic pump (10) is not pumping.

15. The diagnosis apparatus for a hydraulic machine according to any one of claims 11 to 14,
wherein the hydraulic machine comprises a hydraulic motor (20) for driving a generator (8), and
wherein the failure-detection part is configured to detect a failure of the hydraulic motor (20) on the basis of the standard deviation of the torque of the rotation shaft (7) during no-load rotation of the hydraulic motor (20) immediately after the generator (8) is connected to a grid (9).

16. A power generating apparatus of renewable-energy type, comprising:
a rotor (4) configured to rotate by renewable energy;
a hydraulic pump (10) driven by the rotor (4);
a hydraulic motor (20) configured to be driven by pressurized oil produced by the hydraulic pump (10);
a generator (8) configured to be driven by the hydraulic motor (20); and
the diagnosis apparatus according to any one of claims 11 to 15,
wherein the diagnosis apparatus is configured to detect a failure of at least one of the hydraulic pump (10) or the hydraulic motor (20).

## Patentansprüche

1. Diagnoseverfahren einer hydraulischen Maschine, die eine Drehwelle (5,7), eine Hochdruckleitung (30), eine Niederdruckleitung (31), eine Mehrzahl Zylinder (11), eine Mehrzahl Kolben (12), die ausgestaltet sind, um durch die jeweiligen Zylinder (11) geführt zu werden, eine Nocke (14), die für eine Hin- und Herbewegung der Kolben (12) im Zusammenhang mit der Drehung der Drehwelle (5,7) ausgestaltet ist, eine Mehrzahl von Hochdruckventilen (15), die für jeweilige Arbeitsräume (13) vorgesehen sind, welche durch die Zylinder (11) und die Kolben (12) gebildet sind, zum Umschalten eines Verbindungszustands zwischen der Hochdruckleitung (30) und den jeweiligen Arbeitsräumen (13), und eine Mehrzahl Niederdruckventile (16), die für die jeweiligen Arbeitsräume (13) vorgesehen sind, zum Umschalten eines Verbindungszustands zwischen der Niederdruckleitung (13) und den jeweiligen Arbeitsräumen, umfasst, wobei das Verfahren umfasst:
einen Schritt zum Erfassen eines Drehmoments der Drehwelle (5,7) in einem lastfreien Zustand der hydraulischen Maschine; und
einen Schritt zum Erfassen eines Fehlers der hydraulischen Maschine, wobei der Fehler zumindest eins von einem Klemmen der Hochdruckventile (15) in einem offenen Zustand, einem Klemmen der Niederdruckventile (16) in einem geschlossenen Zustand oder einem Klemmen der Kolben (12) umfasst, auf der Grundlage von zumindest einer Standardabweichung des Drehmoments;
wobei, wenn die Standardabweichung des Drehmoments in dem lastfreien Zustand größer als ein Schwellwert ist, bestimmt wird, dass zumindest eines von dem Klemmen der Hochdruckventile (15) in dem offenen Zustand oder dem Klemmen der Kolben (12) aufgetreten ist.

2. Diagnoseverfahren einer hydraulischen Maschine nach Anspruch 1,
des Weiteren einen Schritt zum Erfassen einer Fluktuationskomponente einer spezifischen Frequenz zusätzlich zu der Standardabweichung des Drehmoments aus einer Drehmomentfluktuation der Drehwelle (5,7), einer Druckfluktuation in der Hochdruckleitung (30) und einer Ausgabefluktuation der hydraulischen Maschine, wobei die spezifische Frequenz durch eine Rotationsgeschwindigkeit ω der Drehwelle (5,7) und einer Nocken-Buckelzahl m der Nocke (14) umfasst;
wobei, in dem Schritt des Erfassens des Fehlers der Fehler der hydraulischen Maschine auf der Grundlage der Fluktuationskomponente der spezifischen Frequenz zusätzlich zu der Standardabweichung des Drehmoments erfasst wird.

3. Diagnoseverfahren einer hydraulischen Maschine nach Anspruch 2,
wobei, wenn ein Ausmaß der Fluktuationskomponente der spezifischen Frequenz größer als ein Schwellwert ist, es bestimmt wird, dass zumindest eins von einem Klemmen der Hochdruckventile (15) in dem offenen Zustand, einem Klemmen der Niederdruckventile (16) in dem geschlossenen Zustand oder einem Klemmen der Kolben (12) aufgetreten ist.

4. Diagnoseverfahren einer hydraulischen Maschine nach Anspruch 2 oder 3,
wobei die hydraulische Maschine eine hydraulische Pumpe (10) zum Erzeugen von unter Druck stehendem Öl umfasst;
wobei die Nocke (14) der hydraulischen Pumpe (10) eine Mehrzahl von Nockenbuckeln umfasst, die in Umfangsrichtung der Drehwelle (5) angeordnet sind, und
wobei ein Fehler der hydraulische Pumpe (10) auf der Grundlage des Ausmaßes der Fluktuationskomponente der spezifischen Frequenz erfasst wird, die durch ω x m oder durch ω² x m dargestellt wird (wobei m eine ganze Zahl nicht kleiner als 2 ist), aus der Drehmomentfluktuation der Drehwelle (5), der Druckfluktuation in der Hochdruckleitung (30) und der Ausgabefluktuation der hydraulischen Maschine.

5. Diagnoseverfahren einer hydraulischen Maschine nach einem der Ansprüche 2 bis 4,
wobei der Schritt des Erfassens eines Fehlers der hydraulischen Maschine eine Überwachung umfasst, ob das Ausmaß der Fluktuationskomponente der spezifischen Frequenz einen Schwellwert während des Betriebs der hydraulischen Maschine übersteigt, und
wenn Fluktuationskomponente den Schwellwert übersteigt, der Betrieb der hydraulischen Maschine angehalten wird.

6. Diagnoseverfahren einer hydraulischen Maschine nach Anspruch 1,
wobei die hydraulische Maschine eine hydraulische Pumpe (10) zum Erzeugen von unter Druck stehendem Öl umfasst, und
wobei der Schritt des Erfassens eines Fehlers der hydraulischen Maschine ein Erfassen eines Fehlers der hydraulischen Pumpe (10) auf der Basis der Standardabweichung des Drehmoments der Drehwelle (5) der hydraulischen Pumpe (10) zu der Zeit umfasst, wenn die hydraulische Pumpe (10) nicht pumpt.

7. Diagnoseverfahren einer hydraulischen Maschine nach Anspruch 6,
wobei die hydraulische Maschine einen hydraulischen Motor (20) zum Treiben eines Generators (10) umfasst, und
wobei der Schritt des Erfassens eines Fehlers der hydraulischen Maschine ein Erfassen eines Fehlers des hydraulischen Motors (20) auf der Basis der Standardabweichung des Drehmoments der Drehwelle (7) während einer lastfreien Rotation des hydraulischen Motors (20), unmittelbar nachdem der Generator (10) mit einem Netz (9) verbunden wurde, umfasst.

8. Diagnoseverfahren einer hydraulischen Maschine nach Anspruch 7, des Weiteren mit einem Schritt des Erhöhens der Rotationsgeschwindigkeit des hydraulischen Motors (20), bis der Generator (8) eine Nennrotationsgeschwindigkeit erreicht;
wobei der Schritt des Erfassens eines Fehlers der hydraulischen Maschine eine Erfassung eines Fehlers des hydraulischen Motors (20) auf der Grundlage der Standardabweichung des Drehmoments der Drehwelle (7) zu der Zeit umfasst, wenn der Generator (8) die Nennrotationsgeschwindigkeit erreicht hat, und der hydraulische Motor (20) in dem lastfreien Zustand ist.

9. Diagnoseverfahren einer Leistungserzeugungsvorrichtung für erneuerbare Energie mit einem Rotor (4), der ausgestaltet ist, um durch erneuerbare Energie gedreht zu werden, einer hydraulischen Pumpe (10), die durch den Rotor (4) getrieben wird, einem hydraulischen Motor (20), der ausgestaltet ist, um durch unter Druck stehendem Öl getrieben zu werden, das durch die hydraulischen Pumpe (10) erzeugt wird, und einem Generator (8), der ausgestaltet ist, um durch den hydraulischen Motor (20) getrieben zu werden, wobei das Verfahren umfasst:
einen Schritt zum Erfassen eines Fehlers von zumindest einem der hydraulischen Pumpe (10) oder des hydraulischen Motors (20) durch das Diagnoseverfahren einer hydraulischen Maschine nach einem der Ansprüche 1 - 8.

10. Diagnosevorrichtung für eine hydraulische Maschine, die eine Drehwelle (5,7), eine Hochdruckleitung (30), eine Niederdruckleitung (31), eine Mehrzahl Zylinder (11), eine Mehrzahl Kolben (12), die ausgestaltet sind, um durch die jeweiligen Zylinder (11) geführt zu werden, eine Nocke (14), die für eine Hin- und Herbewegung der Kolben (12) im Zusammenhang mit der Drehung der Drehwelle (5,7) ausgestaltet ist, eine Mehrzahl von Hochdruckventilen (15), die für jeweilige Arbeitsräume (13) vorgesehen sind, welche durch die Zylinder (11) und die Kolben (12) gebildet sind, zum Umschalten eines Verbindungszustands zwischen der Hochdruckleitung (30) und den jeweiligen Arbeitsräumen (13), und eine Mehrzahl Niederdruckventile (16), die für die jeweiligen Arbeitsräume (13) vorgesehen sind, zum Umschalten eines Verbindungszustands zwischen der Niederdruckleitung (13) und den jeweiligen Arbeitsräumen, umfasst, wobei die Diagnosevorrichtung enthält:
einen ersten Sensor zum Erhalten eines Drehmoments der Drehwelle (5,7), und
ein Fehlererfassungsteil, das ausgestaltet ist, um einen Fehler der hydraulischen Maschine zu erfassen, wobei der Fehler zumindest eins von einem Klemmen der Hochdruckventile (15) in einem offenen Zustand, einem Klemmen der Niederdruckventile (16) in einem geschlossenen Zustand oder einem Klemmen der Kolben (12) enthält, auf der Grundlage einer Standardabweichung des Drehmoments der Drehwelle (5,7), das durch ein Messergebnis des ersten Sensors in einem lastfreien Zustand der hydraulischen Maschine erhalten wurde;
wobei das Fehlererfassungsteil ausgestaltet ist, um zu bestimmen, dass zumindest eins von einem Klemmen der Hochdruckventile in dem offenen Zustand oder einem Klemmen der Kolben aufgetreten ist, wenn die Standardabweichung des Drehmoments in dem lastfreien Zustand größer als ein Schwellwert ist.

11. Diagnoseverfahren für eine hydraulische Maschine nach Anspruch 10,
wobei das Fehlererfassungsteil des Weiteren ausgestaltet ist, um den Fehler der hydraulischen Maschine auf der Grundlage einer Fluktuationskomponente einer spezifischen Frequenz von den Fluktuationskomponenten des Drehmoments, des Drucks und der Ausgabe zu erfassen, die von dem Messergebnis des zweiten Sensors erhalten werden, wobei die spezifische Frequenz von einer Rotationsgeschwindigkeit ω der Drehwelle (5,7) und einer Nocken-Buckelzahl m der Nocke (14) bestimmt ist.

12. Diagnosevorrichtung für eine hydraulische Maschine nach Anspruch 11,
wobei die hydraulische Maschine eine hydraulische Pumpe (10) zum Erzeugen von unter Druck stehendem Öl umfasst;
wobei die Nocke (14) der hydraulischen Pumpe (10) eine Mehrzahl von Nockenbuckeln umfasst, die in Umfangsrichtung der Drehwelle (5) angeordnet sind, und
wobei ein Fehler der hydraulische Pumpe (10) auf der Grundlage des Ausmaßes der Fluktuationskomponente der spezifischen Frequenz erfasst wird, die durch ω x m oder durch ω² x m dargestellt wird (wobei m eine ganze Zahl nicht kleiner als 2 ist), aus der Drehmomentfluktuation der Drehwelle (5), der Druckfluktuation in der Hochdruckleitung (30) und der Ausgabefluktuation der hydraulischen Maschine.

13. Diagnosevorrichtung für eine hydraulische Maschine nach Anspruch 11 oder 12,
wobei das Fehlererfassungsteil ausgestaltet ist, um zu überwachen, ob die Fluktuationskomponente während des Betriebs der hydraulischen Maschine einen Schwellwert überschreitet, und um einen Befehl zum Anhalten des Betriebs der hydraulischen Maschine an die hydraulische Maschine auszugeben, wenn die Fluktuationskomponente den Schwellwert übersteigt.

14. Diagnosevorrichtung für eine hydraulische Maschine nach einem der Ansprüche 12 oder 13,
wobei die hydraulische Maschine eine hydraulische Pumpe (10) zur Erzeugung von unter Druck stehendem Öl umfasst, und
wobei das Fehlererfassungsteil ausgestaltet ist, um einen Fehler der hydraulischen Pumpe (10) auf der Grundlage der Standardabweichung des Drehmoments der Drehwelle (5) der hydraulischen Pumpe (10) zu de Zeit zu erfassen, wenn die hydraulische Pumpe (10) nicht pumpt.

15. Diagnosevorrichtung für eine hydraulische Maschine nach einem der Ansprüche 11 bis 14,
wobei die hydraulische Maschine einen hydraulischen Motor (20) zum Treiben eines Generators (8) umfasst, und
wobei das Fehlererfassungsteil ausgestaltet ist, um einen Fehler des hydraulischen Motors (20) auf der Grundlage einer Standardabweichung des Drehmoments der Drehwelle (7) während einer lastfreien Rotation des hydraulischen Motors (20), unmittelbar nachdem der Generator mit einem Stromnetz verbunden wurde, zu erfassen.

16. Leistungserzeugungsvorrichtung vom erneuerbaren Energietyp mit:
einem Rotor (4), der ausgestaltet ist, um durch erneuerbare Energie gedreht zu werden;
einer hydraulischen Pumpe (10), die durch den Rotor (4) getrieben wird;
einem hydraulischen Motor (20), der ausgestaltet ist, um durch unter Druck stehendes Öl getrieben zu werden, das von der hydraulischen Pumpe (10) erzeugt wird;
einem Generator (8), der ausgestaltet ist, um von dem hydraulischen Motor (20) getrieben zu werden; und
einer Diagnosevorrichtung nach einem der Ansprüche 11 bis 15,
wobei die Diagnosevorrichtung ausgestaltet ist, um einen Fehler von zumindest einem der hydraulischen Pumpe (10) oder des hydraulischen Motors (20) zu erfassen.

## Revendications

1. Procédé de diagnostic d'une machine hydraulique, qui comprend un arbre (5, 7) de rotation, une ligne (30) de haute pression, une ligne (31) de basse pression , une pluralité de cylindres (11), une pluralité de pistons (12), configurés pour être guidés par les cylindres (11) respectifs, une came (14), configurée pour faire aller et venir les pistons (12) en liaison avec une rotation de l'arbre (5, 7) de rotation, une pluralité de soupapes (15) de haute pression, prévues pour des chambres (13) de travail respectives formées par les cylindres (11) et les pistons (12), pour commuter un état de communication entre la ligne (30) de haute pression et les chambres (13) de travail respectives et une pluralité de soupapes (16) de basse pression prévues pour les chambres (13) de travail respectives, pour commuter un état de communication entre la ligne (31) de basse pression et les chambres (13) de travail respectives, le procédé comprenant :
un stade de détection d'un couple de l'arbre (5, 7) de rotation dans un état sans charge de la machine hydraulique et
un stade de détection d'un défaut de la machine hydraulique, le défaut comprenant au moins l'un du blocage des soupapes (15) de haute pression dans un état ouvert, du blocage des soupapes (16) de basse pression dans un état fermé ou du blocage des pistons (12) sur la base d'au moins un écart-type du couple,
dans lequel, si l'écart-type du couple, dans l'état sans charge, est plus grand qu'une valeur de seuil, il est déterminé qu'au moins l'un d'un blocage des soupapes (15) de haute de pression dans l'état ouvert ou d'un blocage des pistons (12) s'est produit.

2. Procédé de diagnostic d'une machine hydraulique suivant la revendication 1,
comprenant, en outre, un stade de détection d'une composante de fluctuation d'une fréquence précise, en plus de l'écart-type du couple, parmi une fluctuation de couple de l'arbre (5, 7) de rotation, une fluctuation de pression dans la ligne (30) de haute pression et une fluctuation de débit de la machine hydraulique, la fréquence précise étant déterminée par une vitesse de rotation de l'arbre (5, 7) de rotation et par un nombre m de lobes de came de la came (14),
dans lequel, dans le stade de détection du défaut, on détecte le défaut de la machine hydraulique sur la base de la composante de fluctuation de la fréquence précise, en plus de l'écart-type du couple.

3. Procédé de diagnostic d'une machine hydraulique suivant la revendication 2,
dans lequel, si une amplitude de la composante de fluctuation de la fréquence précise est plus grande qu'une valeur de seuil, il est déterminé qu'au moins l'un d'un blocage des soupapes (15) de haute pression dans l'état ouvert, d'un blocage des soupapes (16) de basse pression dans l'état fermé ou d'un blocage des pistons (12) s'est produit.

4. Procédé de diagnostic d'une machine hydraulique suivant la revendication 2 ou 3,
dans lequel la machine hydraulique comprend une pompe (10) hydraulique pour produire de l'huile sous pression,
dans lequel la came (14) de la pompe (10) hydraulique comprend une pluralité de lobes de came, disposés dans une direction circonférentielle de l'arbre (5) tournant et
dans lequel on détecte un défaut de la pompe (10) hydraulique, sur la base de l'amplitude de la composante de fluctuation de la fréquence précise, représentée par ω x m ou ω² x m (m étant un nombre entier non inférieur à deux) parmi la fluctuation de couple de l'arbre (5) de rotation, la fluctuation de pression dans la ligne (30) de haute pression et la fluctuation de débit de la machine hydraulique.

5. Procédé de diagnostic d'une machine hydraulique suivant l'une quelconque des revendications 2 à 4,
dans lequel le stade de détection d'un défaut de la machine hydraulique comprend contrôler si l'amplitude de la composante de fluctuation de la fréquence précise dépasse une valeur de seuil pendant un fonctionnement de la machine hydraulique et
dans lequel, si la composante de fluctuation dépasse la valeur de seuil, on arrête le fonctionnement de la machine hydraulique.

6. Procédé de diagnostic d'une machine hydraulique suivant la revendication 1,
dans lequel la machine hydraulique comprend une pompe (10) hydraulique pour produire de l'huile sous pression et
dans lequel le stade de détection d'un défaut de la machine hydraulique comprend détecter un défaut de la pompe (10) hydraulique sur la base de l'écart-type du couple de l'arbre (5) de rotation de la pompe (10) hydraulique à l'instant où la pompe (10) hydraulique ne pompe pas.

7. Procédé de diagnostic d'une machine hydraulique suivant la revendication 6,
dans lequel la machine hydraulique comprend un moteur (20) hydraulique pour entraîner une génératrice (9) et
dans lequel le stade de détection d'un défaut de la machine hydraulique comprend détecter un défaut du moteur (20) hydraulique sur la base de l'écart-type du couple de l'arbre (7) de rotation pendant une rotation sans charge du moteur (20) hydraulique, immédiatement après que la génératrice (8) est reliée à un réseau (9).

8. Procédé de diagnostic d'une machine hydraulique suivant la revendication 7, comprenant, en outre, un stade d'augmentation de la vitesse de rotation du moteur (20) hydraulique jusqu'à ce que la génératrice (8) atteigne une vitesse de rotation nominale,
dans lequel le stade de détection d'un défaut de la machine hydraulique comprend détecter un défaut du moteur (20) hydraulique sur la base de l'écart-type du couple de l'arbre (7) de rotation à l'instant où la génératrice (8) a atteint la vitesse de rotation nominale et où le moteur (20) hydraulique est dans l'état sans charge.

9. Procédé de diagnostic d'une installation de production d'énergie électrique du type à énergie renouvelable, comprenant un rotor (4) configuré pour être mis en rotation par de l'énergie renouvelable, une pompe (10) hydraulique entraînée par le rotor (4), un moteur (20) hydraulique configuré pour être entraîné par de l'huile sous pression produite par la pompe (10) hydraulique et une génératrice (8) configurée pour être entraînée par le moteur (20) hydraulique, le procédé comprenant
un stade de détection d'un défaut d'au moins l'un de la pompe (10) hydraulique ou du moteur (20) hydraulique par le procédé de diagnostic d'une machine hydraulique suivant l'une quelconque des revendications 1 à 8.

10. Système de diagnostic d'une machine hydraulique, qui comprend un arbre (5, 7) de rotation, une ligne (30) de haute pression, une ligne (31) de basse pression , une pluralité de cylindres (11), une pluralité de pistons (12), configurés pour être guidés par les cylindres (11) respectifs, une came (14), configurée pour faire aller et venir les pistons (12) en liaison avec une rotation de l'arbre (5, 7) de rotation, une pluralité de soupapes (15) de haute pression, prévues pour des chambres (13) de travail respectives formées par les cylindres (11) et les pistons (12), pour commuter un état de communication entre la ligne (30) de haute pression et les chambres (13) de travail respectives et une pluralité de soupapes (16) de basse pression prévues pour les chambres (13) de travail respectives, pour commuter un état de communication entre la ligne (31) de basse pression et les chambres (13) de travail respectives, le système de diagnostic comprenant :
un premier capteur pour obtenir un couple de l'arbre (5, 7) de rotation et
une partie de détection de défaut configurée pour détecter un défaut de la machine hydraulique, le défaut comprenant au moins l'un d'un blocage des soupapes (15) de haute pression dans un état ouvert, d'un blocage des soupapes (16) de basse pression dans un état fermé ou d'un blocage des pistons (12) sur la base d'un écart-type du couple de l'arbre (5, 7) de rotation obtenu par un résultat de mesure du premier capteur dans un état sans charge de la machine hydraulique,
dans lequel la partie de détection d'un défaut est configurée pour déterminer qu'au moins l'un d'un blocage des soupapes (15) de haute pression dans l'état ouvert ou d'un blocage des pistons (12) s'est produit, si l'écart-type du couple, dans l'état sans charge, est plus grand qu'une valeur de seuil.

11. Système de diagnostic d'une machine hydraulique suivant la revendication 10,
dans lequel la partie de détection d'un défaut est configurée, en outre, pour détecter le défaut de la machine hydraulique sur la base d'une composante de fluctuation d'une fréquence précise parmi des composantes de fluctuation du couple, de la pression et du débit, obtenues à partir du résultat de mesure du deuxième capteur, la fréquence précise étant déterminée à partir d'une vitesse ω de rotation de l'arbre (5, 7) de rotation et d'un nombre m de lobes de came de la came (14).

12. Système de diagnostic d'une machine hydraulique suivant la revendication 11,
dans lequel la machine hydraulique comprend une pompe (10) hydraulique pour produire de l'huile sous pression,
dans lequel la came (14) de la pompe (10) hydraulique comprend une pluralité de lobes de came, disposés dans une direction circonférentielle de l'arbre (5) de rotation et
dans lequel la partie de détection d'un défaut est configurée pour détecter un défaut de la pompe (10) hydraulique sur la base d'une amplitude de la composante de fluctuation de la fréquence précise, représentée par ω x m ou par ω² x m (m étant un nombre entier non inférieur à 2) parmi une fluctuation de couple de l'arbre (5) de rotation, une fluctuation de pression dans la ligne (30) de haute pression et une fluctuation de débit de la machine hydraulique.

13. Système de diagnostic d'une machine hydraulique suivant la revendication 11 ou 12,
dans lequel la partie de détection d'un défaut est configurée pour contrôler si la composante de fluctuation dépasse une valeur de seuil pendant le fonctionnement de la machine hydraulique, et pour envoyer à la machine hydraulique une instruction de cesser de fonctionner, si la composante de fluctuation dépasse la valeur de seuil.

14. Système de diagnostic d'une machine hydraulique suivant l'une quelconque des revendications 12 ou 13,
dans lequel la machine hydraulique comprend une pompe (10) hydraulique pour produire de l'huile sous pression et
dans lequel la partie de détection d'un défaut est configurée pour détecter un défaut de la pompe (10) hydraulique sur la base de l'écart-type du couple de l'arbre (5) de rotation de la pompe (10) hydraulique, à l'instant où la pompe (10) hydraulique ne pompe pas.

15. Système de diagnostic d'une machine hydraulique suivant l'une quelconque des revendications 11 à 14,
dans lequel la machine hydraulique comprend un moteur (20) hydraulique pour entraîner une génératrice (8) et
dans lequel la partie de détection d'un défaut est configurée pour détecter un défaut du moteur (20) hydraulique sur la base de l'écart-type du couple de l'arbre (7) de rotation pendant une rotation sans charge du moteur (20) hydraulique, immédiatement après que la génératrice (8) est connectée à un réseau (9).

16. Installation de production d'énergie électrique de type à énergie renouvelable, comprenant :
un rotor (4), configuré pour être mis en rotation par de l'énergie renouvelable ;
une pompe (10) hydraulique entraînée par le rotor (4) ;
un moteur (20) hydraulique, configuré pour être entraîné par de l'huile sous pression produite par la pompe (10) hydraulique ;
une génératrice (8), configurée pour être entraînée par le moteur (20) hydraulique et
le système de diagnostic suivant l'une quelconque des revendications 11 à 15,
dans lequel le système de diagnostic est configuré pour détecter un défaut d'au moins de la pompe (10) hydraulique ou du moteur (20) hydraulique.
